# EUROPEAN PATENT APPLICATION

(11) **EP 4 130 914 A1**
(43) Date of publication of application: **08.02.2023**
(21) Application number: 22187229.4
(22) Date of filing: 27.07.2022
(51) Int. Cl.: G05B 23/02

(54) **SYSTEM AND METHOD FOR MONITORING LIFE LIMIT OF ENGINE COMPONENTS**

(30) Priority: 04.08.2021 US 202117393515
(71) Applicant: PRATT & WHITNEY CANADA CORP., Longueuil, Québec J4G 1A1 (CA)
(72) Inventor: McCARTHY, Sean, Longueuil, J4G 1A1 (CA); GHATTAS, Andrew, Longueuil, J4G 1A1 (CA)
(74) Representative: Dehns

(57) **Abstract**

There is provided a monitoring method and system for an aircraft engine (10). At an engine controller (206), a current value of an ageing parameter of at least one component (202) of the aircraft engine (10) is obtained, the at least one component (202) having a life limit associated therewith. Based on the current value of the ageing parameter, it is determined, at the engine controller (206), whether the life limit of the at least one component (202) has been reached. A start of the aircraft engine (10) is inhibited, at the engine controller (206), when the life limit of the at least one component (202) has been reached.

## Description

### TECHNICAL FIELD

The application relates generally to engine safety, and, more particularly, to monitoring the life limit of engine components.

### BACKGROUND OF THE ART

Components in aircraft engines, and more particularly rotating components, experience various forms of fatigue. Component fatigue can occur as a result of operation at high temperatures, of repeated plastic deformation of components during use, and the like. Fatigued components can eventually break or otherwise fail, and aircraft components can be subjected to regulations requiring preventative maintenance or replacement of components to avoid fatigue-related failure.

Existing approaches for monitoring component fatigue require sophisticated hardware, which may not be available on many simple aircraft. In addition, existing monitoring approaches can overestimate the wear on components and lead to early replacement or maintenance.

As such, there is room for improvement.

### SUMMARY

In one aspect, there is provided a monitoring method for an aircraft engine. The method comprises obtaining, at an engine controller, a current value of an ageing parameter of at least one component of the aircraft engine, the at least one component having a life limit associated therewith, determining, at the engine controller, based on the current value of the ageing parameter, whether the life limit of the at least one component has been reached, and inhibiting, at the engine controller, a start of the aircraft engine when the life limit of the at least one component has been reached.

In another aspect, there is provided a monitoring system for an aircraft engine. The system comprises a processing unit and a non-transitory computer-readable medium coupled to the processing unit and having stored thereon instructions executable by the processing unit for obtaining, at an engine controller, a current value of an ageing parameter of at least one component of the aircraft engine, the at least one component having a life limit associated therewith, determining, at the engine controller, based on the current value of the ageing parameter, whether the life limit of the at least one component has been reached, and inhibiting, at the engine controller, a start of the aircraft engine when the life limit of the at least one component has been reached.

Features of embodiments are set forth in the dependent claims.

### DESCRIPTION OF THE DRAWINGS

Reference is now made to the accompanying figures in which:
Fig. 1 is a schematic cross sectional view of a gas turbine engine;
Fig. 2 is a block diagram of an example aircraft comprising the gas turbine engine of Fig. 1, in accordance with an illustrative embodiment.
Fig. 3 is a block diagram of the engine controller of Fig. 2, in accordance with an illustrative embodiment;
Fig. 4 is a block diagram of an example computing device, in accordance with an illustrative embodiment;
Fig. 5A is a flowchart of a monitoring method for an aircraft engine, in accordance with an illustrative embodiment;
Fig. 5B is a flow diagram of the step of Fig. 5A of determining whether the life limit of at least one component of the aircraft engine has been reached, in accordance with an illustrative embodiment; and
Fig. 5C is a flow diagram of the step of Fig. 5A of enabling the start of the aircraft engine upon receipt of a predetermined input sequence, in accordance with an illustrative embodiment.

It will be noted that throughout the appended drawings, like features are identified by like reference numerals.

### DETAILED DESCRIPTION

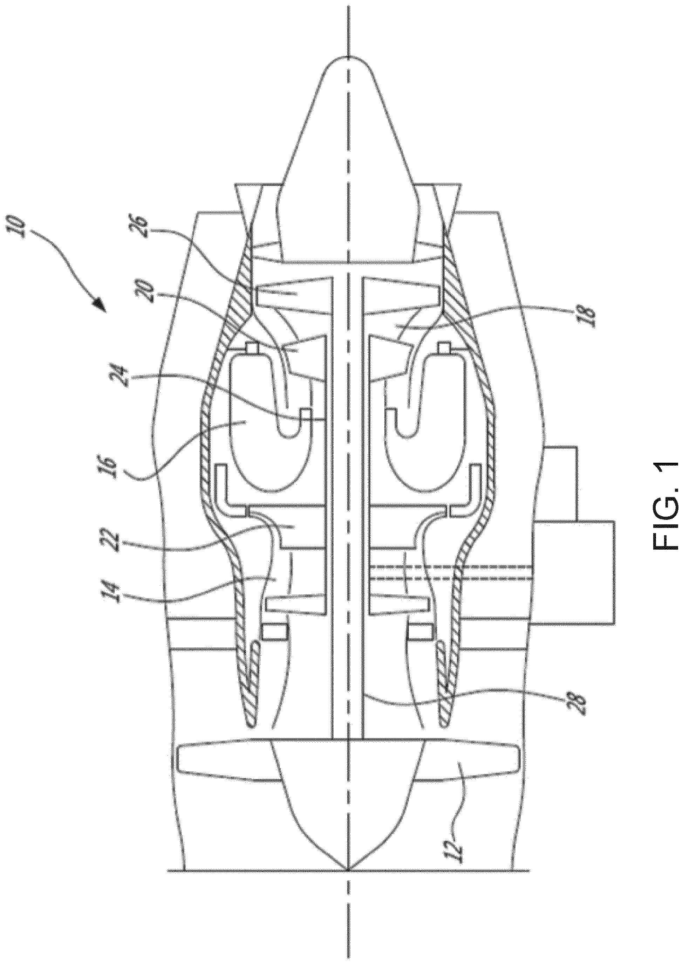

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. High pressure rotor(s) 20 of the turbine section 18 are drivingly engaged to high pressure rotor(s) 22 of the compressor section 14 through a high pressure shaft 24. Low pressure rotor(s) 26 of the turbine section 18 are drivingly engaged to the fan rotor 12 and to other low pressure rotor(s) (not shown) of the compressor section 14 through a low pressure shaft 28 extending within the high pressure shaft 24 and rotating independently therefrom.

Although illustrated as a turbofan engine, the gas turbine engine 10 may alternatively be another type of engine, for example a turboshaft engine, also generally comprising in serial flow communication a compressor section, a combustor, and a turbine section, and a fan through which ambient air is propelled. A turboprop engine may also apply. In addition, the engine 100 may be an auxiliary power unit (APU), an auxiliary power supply (APS), a hybrid engine, or any other suitable type of engine. In addition, although the engine 10 is described herein for flight applications, it should be understood that other uses, such as industrial or the like, may apply.

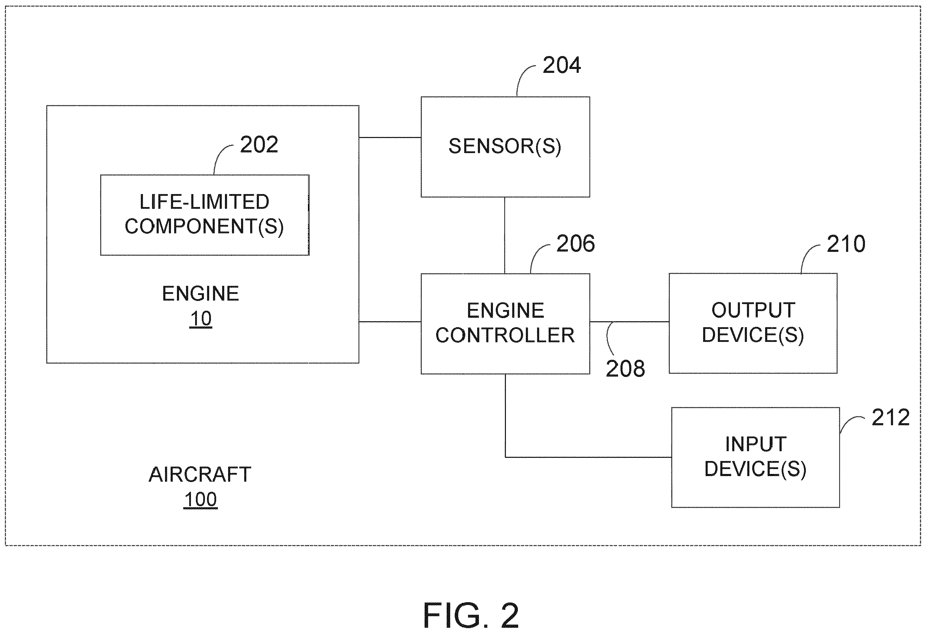

Fig. 2 illustrates an example aircraft 100 comprising the engine 10. Although reference is made herein below to a single engine 10, it should be understood that the aircraft 100 may comprise one or more engines as in 10 having different mounting positions on the aircraft 100. Components in aircraft 100, for example in aircraft engine 10, are subject to a variety of regulatory standards. Some regulatory standards relate to component integrity. In particular, regulations may require that a particular component of aircraft 100 or aircraft engine 10 be replaced or destroyed after a predetermined period of time, after the component has been subjected to a predetermined number of rotations, cycles, flight miles, or the like. This mandatory replacement limit is referred to herein as a "life limit" (i.e. a limited serviceable life or lifetime) that may not be exceeded under any circumstance. In other words, the life limit of a given component of the aircraft 100 or engine 10 may be indicative of the necessity to replace or destroy the component once its life limit has been reached. The life limit may be set by the engine or aircraft manufacturer and may vary depending on engine configuration and usage characteristics.

The life limit applies to life-limited component(s) 202 provided on the engine 10 and/or mounted on the aircraft 100. In one embodiment, the life-limited component(s) 202 comprise one or more rotating engine components configured to rotate about an axis, such as about a rotating shaft of the engine 10. In one embodiment, these rotating components comprise components of the compressor section 14 and/or the turbine section 18 of the engine 10. More specifically, in one embodiment, the rotating components may comprise the low-pressure compressor (LPC), the high-pressure compressor (HPC), the low-pressure turbine (LPT), and the high-pressure turbine (HPT) of the engine 10. In some embodiments, the rotating components may also comprise an intermediate pressure compressor (IPC) and an intermediate pressure turbine (IPT) of the engine 10, if applicable. In yet other embodiments, the rotating components may comprise rotating seals and/or high pressure turbine blades. Other embodiments may apply.

Still referring to Fig. 2, one or more sensors 204 may be provided per engine 10 to collect one or more measurements (also referred to herein as measurement data) from the engine 10 and/or to the aircraft 100 for monitoring operating conditions of the engine 10 and/or to the aircraft 100. The sensor(s) 204 may be coupled to the engine 10 and/or the aircraft 100 in any suitable fashion. In some embodiments, the sensor(s) 204 may be mounted directly on the engine 10 and the installation may be permanent or temporary. A permanent mount may be performed during manufacture of the engine 10. When the aircraft 100 is assembled, the sensor(s) 204 may be connected to an existing aircraft harness (not shown). One or more additional cables, adapters, connectors, and/or harnesses may be added in order to connect the sensor(s) 204 to the existing aircraft harness. A temporary mount may be performed after manufacture of the engine 10 and/or after aircraft assembly, such as during aircraft maintenance.

The sensor(s) 204 are configured to sense various parameters pertinent to the operating conditions of the engine 10 and/or the environment of the aircraft 100. The sensor(s) 204 may comprise, but are not limited to, temperature sensor(s), pressure sensor(s), humidity sensor(s), altitude meter(s), speed sensor(s), accelerometer(s), flow sensor(s), valve position sensor(s), guide vane angle sensor(s), phase angle sensor(s), and/or torque sensor(s). In order to allow for the life limit of the life-limited component(s) 202 to be monitored, the sensor(s) 204 are configured to acquire measurement data from the engine 10. In one embodiment, the life-limited components 202 are rotating engine components and the life limit of each life-limited component 202 is defined as a function of the number of rotations of the rotating component. The sensor(s) 204 may therefore be used to monitor rotation of each life-limited component 202. The sensor(s) 204 may indeed be operatively coupled to each life-limited component 202 (e.g., installed thereon or in proximity thereto) and each sensor 204 may be configured to generate a sensor signal (e.g., an electrical signal, digital or analog, or any other suitable type of signal) during rotation of the life-limited component 202. For example, each life-limited component 202 may be provided with a position marker (not shown) detectable by the sensor(s) 202. The sensor signal generated by a given sensor 204 may then comprise one or more signal pulses, each signal pulse produced upon the sensor 204 detecting the presence (or passage) of the position marker in a sensing zone of the sensor 204. In other words, a signal pulse may be generated each time the life-limited component 202 completes a full rotation. Other embodiments may apply.

For example, in some embodiments, the life limit of each life-limited component 202 may be defined as a function of any suitable parameter(s) including, but not limited to, temperature and pressure of the engine 10. Indeed, the life-limited component 202 may be designed such that it cannot be operated so as to exceed a maximum number of cycles, the cycles being determined based on any suitable parameter(s), such as a temperature of the engine 10, a pressure of the engine 10, a speed of the engine 10, or the like. Depending on the manner in which the engine 10 is operated, the number of cycles associated with the life-limited component 202 may increase (e.g., by 0.5 or 1 for each fight mission). The accrual in the number of cycles may then be equivalent to a count and may be used to monitor the life limit of the life-limited component 202.

As shown in Fig. 2, the sensor(s) 204 are communicatively coupled with an engine control system, for example an engine controller 206, to transmit the sensor signal(s) to the engine control system in order to allow for monitoring of the life limit of the life-limited component(s) 202. The sensor signal(s) may be transmitted to the engine controller 206 over a wired connection (e.g. via the existing aircraft harness and/or additional cables, adapters, connectors, and/or harnesses), using any suitable technology (including, but not limited to, RS-232, USB, USB 2.0, USB 3.0, USB-C, Thunderbolt^{™}, Ethernet, and the like) to establish the wired connection. Alternatively, transmission of the data collected by the sensor(s) 204 may be performed wirelessly, using any suitable wireless technology (including, but not limited to, radio waves (e.g., VHF radio, HF radio), Bluetooth^{™}, Zigbee^{™}, Ultra-wideband (UWB), mobile broadband, wireless spread spectrum such as Wi-Fi, cellular data service, satellite communication (SATCOM), SATA, e-SATA, and the like) to establish the wireless connection. Therefore, the sensor(s) 204 may be configured for providing the measurement data to the engine controller 206 via any suitable wired or wireless communication path.

The engine controller 206 can be any suitable type of engine controller, including a full-authority digital engine controller (FADEC) or similar device. The engine controller 206 is configured for logging various information about aircraft usage and operating conditions. The engine controller 206 can monitor the operation of one or more engines of an aircraft as in 100, such as engine 10 (e.g., to determine time of operation, track the power level of the engine 10 over the period of operation, log the occurrence of unexpected events during the period of operation, and the like), and to control the operation of the engine 10 (e.g., control a starting sequence of the engine 10, modulate a fuel flow rate provided to the engine 10, control the position and/or orientation of variable geometry mechanisms within the engine 10, modulate a bleed level of the engine 10, and the like). As will be discussed further below, the engine controller 206 is also configured to monitor a life limit of the life-limited component(s) 202 (e.g., during a period of operation of the engine 10) and to control operation of the engine 10 based on the life limit as monitored. For this purpose, the engine controller 206 may be configured to obtain, based on the sensor signal(s) received from the sensor(s) 204, usage data indicative of a current (or actual) value of an ageing parameter of the life-limited component(s) 202, to determine, based on the usage data, whether the life limit of the life-limited component(s) 202 has been reached, and to prevent a start of the engine 10 (e.g., impede a subsequent or next engine start) when it is determined that the life limit has been reached. In one embodiment, measurements are acquired by the sensor(s) 204 during a flight mission (or while the aircraft 100 is on the ground following the flight mission) and the engine controller 206 may be configured to obtain the usage data and determined from the usage data whether the life limit has been reached at any suitable time (e.g., while the aircraft 100 is airborne or on the ground, during a given flight mission while the engine 10 is in operation, following the flight mission, or at any other suitable moment).

The ageing parameter is indicative of use or wear of the life-limited component(s) 202 over a period of operation of the engine 10. In one embodiment, the ageing parameter is a number of rotations of the life-limited component(s) 202. The engine controller 206 may then count the number of rotations the life-limited component(s) 202 have been subjected to (e.g., during the period of operation of the engine 10) in order to obtain the usage data (i.e. the current value of the ageing parameter). In one embodiment, a counter may be used to count the number of pulses contained in a given sensor signal received from the sensor(s) 204 and the engine controller 206 may determine the number of rotations of the life-limited component(s) 202 based on the number of pulses as counted. The counter may be implemented in any suitable manner such as hardware, software, firmware, or combinations thereof. For example, hardware including, but not limited to, logic gates, logic blocks, or other logic circuitry may be used. For software or firmware implementations, computer-executable or machine-executable instructions written in any suitable programming language to perform given functions may apply.

While reference is made herein to the ageing parameter being the number of rotations of the life-limited component(s) 202, it should be understood that other ageing parameters may apply. For example, in some embodiments, the ageing parameter may comprise a number of counts (also referred to herein as "cycles") that the engine 10 (and thus the life-limited component(s) 202) accrues in a particular flight mission, the number of counts depending on any suitable parameter including, but not limited to, speed, temperature, or pressure of the engine 10.

Still referring to Fig. 2, the engine controller 206 is communicatively coupled (e.g., via a suitable communication link or path 208) to one or more output devices 210 for providing, for example to an operator of the aircraft 100 such as a pilot or maintenance crew, an indication of the usage data pertaining to the life-limited component(s) 202. The output device(s) 210 can be any suitable type of device for outputting information. In some embodiments, the output device(s) 210 comprise one or more displays installed in a cockpit of the aircraft 100. In some other embodiments, the output device(s) 210 comprise one or more speakers or other audio systems within the cockpit of the aircraft 100. In some other embodiments, the output device(s) 210 comprise any suitable combination of displays and speakers. Although the output device(s) 210 are illustrated in Fig. 2 as provided on the aircraft 100, it should be understood that, in some embodiments, one or more of the output device(s) 210 may be located outside of the aircraft 100. For example, the output device(s) 210 may comprise one or more handled devices in proximity to the engine 10 (e.g., carried by an operator, such as a maintenance technician, located outside the aircraft 100). Such handheld devices may be communicatively coupled (e.g., in a wired or wireless manner) to the engine controller 206 and may be used by the operator to query the engine controller 206 to obtain information (e.g., usage data) pertaining to operating conditions of the aircraft 100 and/or to the engine 10. Other embodiments may apply.

In one embodiment, the engine controller 206 may also be coupled to one or more input devices 212 from which input data may be received. In one embodiment, the input device(s) 212 comprise cockpit control(s) provided in a cockpit of aircraft 100. The cockpit controls may include buttons, switches, dials, pedals, levers, or other discrete-type input mechanisms. During normal operation of the aircraft 100, the input device(s) 212 (e.g., the cockpit control(s)) are actuated according to predetermined sequences (e.g., provided in flight procedure manuals) in order to control and monitor the operation of the engine 10 and aircraft 100 in flight. As will be discussed further below, in one embodiment, the input device(s) 212 (e.g., the cockpit control(s)) may be used by an operator of the aircraft 100 to request the engine controller 206 to allow engine start.

In addition to the component integrity regulations described herein above, communication systems in aircraft 100 can be subject to regulations which assign an attribute, also referred to as a "trust level", to each component in a communication network (e.g., a Functional Development Assurance Level, or FDAL). The FDAL is tahe measure of rigor applied to the development process to limit, to a level acceptable for safety, the likelihood of errors occurring during the development process of functions (at aircraft level or system level) that have an adverse safety effect. In orderto communicate critical information (e.g., which can be indicative of catastrophic failure, severe failure, or other hazardous conditions), components with a high trust level (e.g., FDAL-A) are required. Less critical information (e.g., which can be indicative of major or minor failure, or without any safety effect) can be communicated using components with lower trust levels. One example of these regulations can be found in the Society of Automotive Engineers (SAE) Aerospace Recommended Practice (ARP) 4754A.

Aircraft engines, such as engine 10, are typically provided with an engine controller 206 having a trust level suitable (i.e. high enough) for electronically reporting usage data, such as engine component rotation counts. However, smaller and less sophisticated aircraft can lack the requisite equipment for providing operators with the usage data obtained by the engine controller 206. The communication systems used to relay the usage data to an operator can therefore be of an unsuitable (i.e. too-low) trust level, and thus may in some embodiments not respect established regulatory standards. In addition, due to their low trust level, the use of these communication systems may result in the usage data being incorrect when received. Receipt of incorrect usage data can have undesirable (e.g., adverse safety) effects as it can lead to an underestimation (or an overestimation) of the wear on components and result in late (or early) replacement or maintenance.

In certain embodiments, the engine controller 206 is assigned a trust level (e.g., FDAL-A or FDAL-B) suitable for communicating information relating to top-level failure conditions of catastrophic, severe, and/or hazardous levels. As a result, the engine controller 206 is suitable for communicating the usage data relating to the life-limited component(s) 202. The output device(s) 210 are however typically assigned a lower trust level than the engine controller 206, for example FDAL-B, FDAL-C, or FDAL-D. Under standard regulatory guidelines, information provided from the engine controller 206 to the output device(s) 210 is assigned the lowest trust level of any component in the path. Therefore, communication between the engine controller 206 and the output device(s) 210 is assigned a trust level lower than required for reporting usage data for a period of operation of the aircraft 100. In other words, due to the lower trust level of the communication link 208 and/or of the output device(s) 210, usage data obtained by the engine controller 206 cannot be provided to an operator of the aircraft 100 in a regulation-compliant fashion via the communication link 208.

The present disclosure relates to methods and systems for monitoring and reporting the life limit of components of an aircraft as in 100, including of aircraft engines as in 10, which respect established regulatory standards. The proposed systems and methods allow for monitoring and reporting the life limit despite at least some of the equipment for providing the usage data not having a suitable trust level.

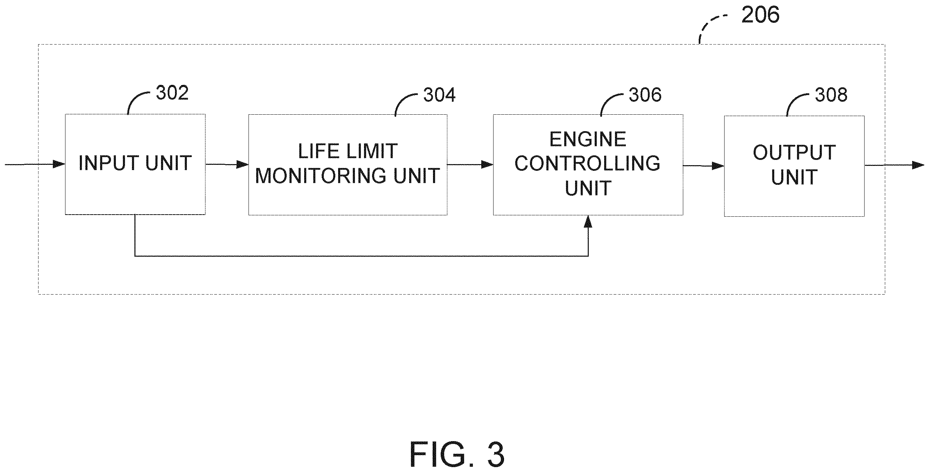

Referring now to Fig. 3 in addition to Fig. 2, the engine controller 206 illustratively comprises an input unit 302, a life limit monitoring unit 304, an engine controlling unit 306, and an output unit 308. The input unit 302 is configured to receive sensor signal(s) from the sensor(s) 204, the sensor signal(s) comprising measurement data indicative of operating conditions of the engine 10, as described herein above. The sensor signal(s) are then sent from the input unit 302 to the life limit monitoring unit 304, which is configured to monitor the life limit of the life-limited component(s) 202. For this purpose and as discussed herein above, the life limit monitoring unit 304 obtains usage data for the life-limited component(s) 202, the usage data indicative of a current value of the ageing parameter of the life-limited component(s) 202. As described herein above, in one embodiment, the engine controlling unit 306 may be configured to count the number of rotations of the life-limited component(s) 202 based on the sensor signal(s), thus providing the usage data.

The life limit monitoring unit 304 may then determine, from the usage data, whether the life limit of the life-limited component(s) 202 has been reached. This may be performed by comparing, for each life-limited component 202 being monitored, the current value of the ageing parameter, and more particularly the number of rotations as computed, to a pre-determined threshold. If the current value of the ageing parameter is below the threshold, the life limit monitoring unit 304 determines that the life limit of the life-limited component 202 has not been reached. Normal operation of the engine 10 may therefore continue. Otherwise, if the current value of the ageing parameter is equal to or above the threshold, the life limit monitoring unit 304 determines that the life limit of the life-limited component 202 has been reached and that a start of the engine 10 is to be inhibited.

The value of the threshold may vary depending on engine configuration and may be retrieved from memory or other suitable storage coupled to the engine controller 206. In some embodiments, the threshold may be set to a maximum threshold value and the life limit monitoring unit 304 determines that the life limit of the life-limited component 202 has been reached when the current value of the ageing parameter reaches the maximum threshold value (meaning that the component's lifetime has been exhausted). In other embodiments, the value of the threshold may include a safety margin (or tolerance) relative to the maximum threshold value, such that the value of the threshold is lower than the maximum threshold value. This may provide the operator of the aircraft 100 with some flexibility (e.g., additional time) in order to be able to complete a planned mission (e.g., a return flight to an airport). The life limit monitoring unit 304 may therefore determine that the life limit of the life-limited component 202 has been reached when the current value of the ageing parameter reaches the threshold, which is set to a value below the maximum threshold value (meaning that the component's lifetime is about to be exhausted). As such, as used herein, the term "reached" (when referring to the life limit of a life-limited component) indicates that threshold value has been met or exceeded (within a predetermined tolerance) and that the component's lifetime has been (or is about to be) exhausted.

The life limit monitoring unit 304 outputs a result of the determination (of whether the life limit has been reached or not) to the engine controlling unit 306 to cause an operation of the engine 10 to be adjusted in accordance with the determination. When it is determined that the life limit of the engine 10 has been reached, the engine controlling unit 306 outputs a control signal comprising instructions to prevent the start of the engine 10 (e.g., prohibit the next engine start). The engine controlling unit 306 then sends the control signal to the output unit 308 for causing the engine 10 to be controlled according to the instructions contained in the control signal (e.g., causing the start of the engine 10 to be inhibited). By preventing engine start, the systems and methods described herein allow the engine controller 206 to provide an indication that the life limit of one or more life-limited components 202 has been reached (i.e. to report the life limit), without having to communicate the usage data to via the communication link 208 and/or of the output device(s) 210, which have a trust level that is not sufficient to comply with established regulatory standards. In some embodiments, the engine controller 206 inhibits engine start until the life-limited component(s) 202 for which the life limit have been reached have been replaced.

Still, in some embodiments, it may be desirable for the engine controller unit 306 to communicate the usage data (i.e. the current value of the component's ageing parameter) to the output device(s) 210 over the communication link 208, regardless of whether the communication systems have sufficiently-high trust level, i.e. regardless of whether or not the usage data will be correct when received at the output device(s) 210. Thus, the engine controlling unit 306 may be configured to send the usage data (e.g., engine component rotation counts) as determined to the output unit 308 for transmission (e.g., using the communication link 208) to the output device(s) 210. The output unit 308 may then format the usage data for rendering via the output device(s) 210. In some embodiments, when the engine controlling unit 306 has determined that the life limit of the life-limited component(s) 202 has been reached and has communicated this determination to the output unit 308, the output unit 308 may also be configured to trigger an alert (e.g., in addition or as an alternative to transmitting the usage data). The output unit 308 may generate a notification (e.g., a warning message or other suitable indication) informing the aircraft operator that the life-limit of a given life-limited component 202 has been reached (and/or that engine start has been inhibited due to the life limit having been reached). The output unit 308 may also be configured to transmit the notification to the output device(s) 210 for rendering thereon. Upon receipt of the notification, the operator may take any suitable action (e.g., replacement of the life-limited component 202) to prevent endangering the integrity of the engine 10 and/or aircraft 100 and its passengers.

As mentioned herein above, in some embodiments, the operator of the aircraft 200 may override the instructions generated by the engine controlling unit 306 to inhibit the start of the engine 10. For this purpose, after having been presented with the usage data (or with the warning indication), the operator may actuate the input device(s) 202 (e.g., the cockpit controls) according to a predetermined input sequence (also referred to as an "actuation sequence") that is uniquely indicative that overriding of the instructions to inhibit engine start is desired. The predetermined input (or actuation) sequence may depend on engine configuration and may therefore vary from one engine to the next. In one embodiment, performing the predetermined actuation sequence comprises actuating a series of input mechanisms of the aircraft 100 (e.g., toggling and/or pressing a predetermined number of buttons, switches, dials, pedals, levers, or the like) in a unique manner (e.g., according to a predetermined order, combination, timing, or the like). By performing the predetermined actuation sequence, the operator of the aircraft 100 may indeed provide to the engine controller 206 an indication (i.e. acknowledge) that the operator is aware that the life limit of the life-limited component(s) 202 has been reached but still requests for the start of the engine 10 to be allowed by the engine controller 206. This may, for instance, be the case when the aircraft 100 (e.g., a helicopter) is stranded on an oil-rig and needs to get back to land, or in the event an emergency flight with an ailing patient is required.

The predetermined actuation sequence may be stored in a memory or other suitable storage accessible to the engine controller 206. After it has been determined (at the life limit monitoring unit 304) that the life limit of the life-limited component(s) 202 has been reached and after a control signal has been output (at the engine controlling unit 306) to inhibit the start of the engine 10, the engine controller 206 may be configured to monitor receipt, at the input unit 302, of the predetermined actuation sequence. As previously mentioned, the operator typically actuates the input device(s) 212 during normal operation of the aircraft 100. As such, upon receipt from the input device(s) 212 of input signal(s) indicative of an actuation sequence having been performed by the operator, the engine controller 206 may be configured to assess whether the received input signal(s) correspond to the predetermined actuation sequence (i.e. performed after the life limit of one or more life-limited components 202 has been reached) or to a regular actuation sequence (i.e. performed during the normal course of operation of the engine 10 and/or aircraft 100). The input signal(s) may be received from the input device(s) 212 at the input unit 302 and the corresponding actuation data (indicative of the actuation sequence corresponding to the input signal(s)) sent to the engine controlling unit 306. The engine controlling unit 306 may then retrieve the predetermined actuation sequence from memory (or other storage) and compare the received actuation data to the predetermined actuation sequence. When the actuation data received from the input unit 302 matches the predetermined actuation sequence, the engine controlling unit 306 determines that a request to override the control signal inhibiting engine start has been received. The engine controlling unit 306 may then generate a new control signal comprising instructions to enable (i.e. allow) the start of the engine 10, the instructions contained in the new control signal overriding the instructions contained in the previously-sent control signal. The engine control unit 306 then sends the new control signal to the output unit 308 for causing the start of the engine 10 to be allowed.

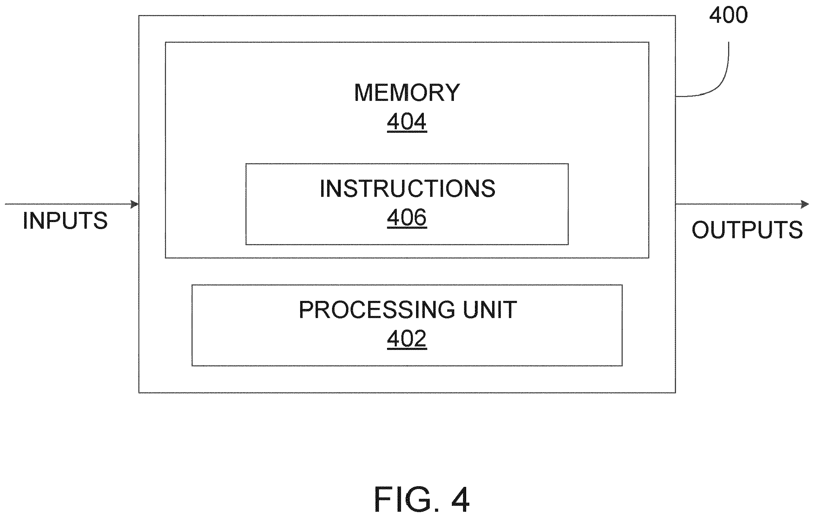

With reference to Fig. 4, an example of a computing device 400 is illustrated. For simplicity only one computing device 400 is shown but the system may include more computing devices 400 operable to exchange data. The computing devices 400 may be the same or different types of devices. The controller 206 of Fig. 2 may be implemented with one or more computing devices 400. Note that the controller 206 can be implemented as part of a full-authority digital engine controls (FADEC) or other similar device, including electronic engine control (EEC), engine control unit (ECU), electronic propeller control, propeller control unit, and the like. In some embodiments, the controller 206 is implemented as a Flight Data Acquisition Storage and Transmission system, such as a FAST^{™} system. The controller 206 may be implemented in part in the FAST^{™} system and in part in the EEC. Other embodiments may also apply.

The computing device 400 comprises a processing unit 402 and a memory 404 which has stored therein computer-executable instructions 406. The processing unit 402 may comprise any suitable devices configured to implement the methods described herein such that instructions 406, when executed by the computing device 400 or other programmable apparatus, may cause the functions/acts/steps performed as part of the methods as described herein to be executed. The processing unit 402 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 404 may comprise any suitable known or other machine-readable storage medium. The memory 404 may comprise non-transitory computer readable storage medium, for example, but not limited to, an electronic, magnetic, optical, electromagnetic, infrared, or semiconductor system, apparatus, or device, or any suitable combination of the foregoing. The memory 404 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 404 may comprise any storage means (e.g., devices) suitable for retrievably storing machine-readable instructions 406 executable by processing unit 402.

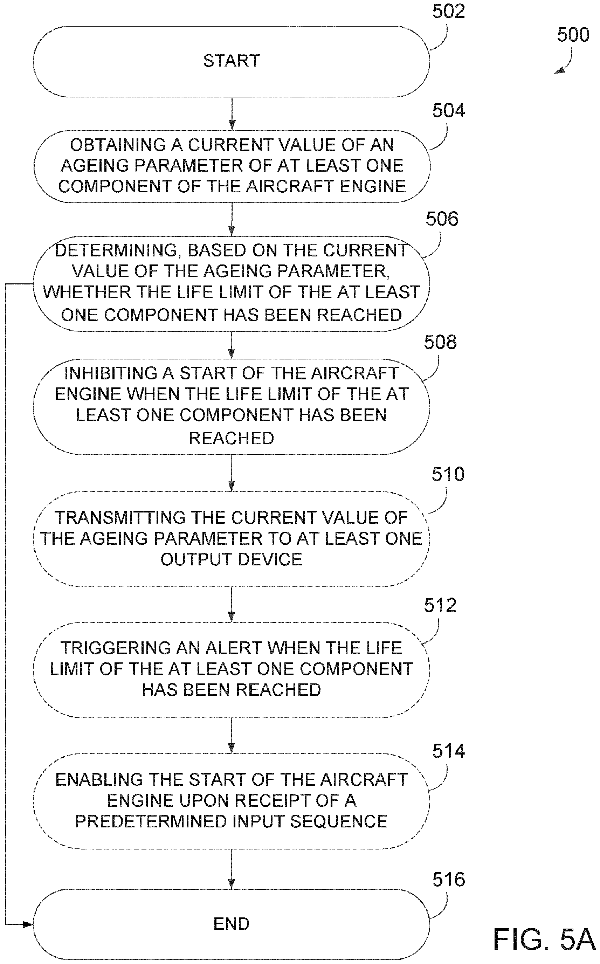

With reference to Fig. 5A, there is shown a monitoring method 500 for an aircraft engine, for instance the engine 10 of Fig. 1, in accordance with one embodiment. The method 500 is illustratively performed at the engine controller (reference 206 in Fig. 2). After start (step 502), a current value of an ageing parameter of at least one component of the aircraft engine is obtained (step 504). As described herein above, in some embodiments, the ageing parameter is a number of rotations of a rotating component of the aircraft engine and the current value of the ageing parameter may be obtained at step 504 by counting the number of rotations over a period of operation of the aircraft engine. Based on the current value of the ageing parameter, it is then determined whether the life limit of the at least one component has been reached (step 506). When the life limit of the at least one component has been reached, a start of the aircraft engine is inhibited (step 508). The current value of the ageing parameter may be optionally transmitted to at least one output device (step 510) and an alert may be optionally triggered when the life limit of the at least one component has been reached (step 512). In some embodiments, the start of the aircraft engine is inhibited until the at least one component is replaced. In other embodiments, the start of the aircraft engine may be optionally enabled upon receipt of a predetermined input sequence (step 514). The method 500 may then end at step 516.

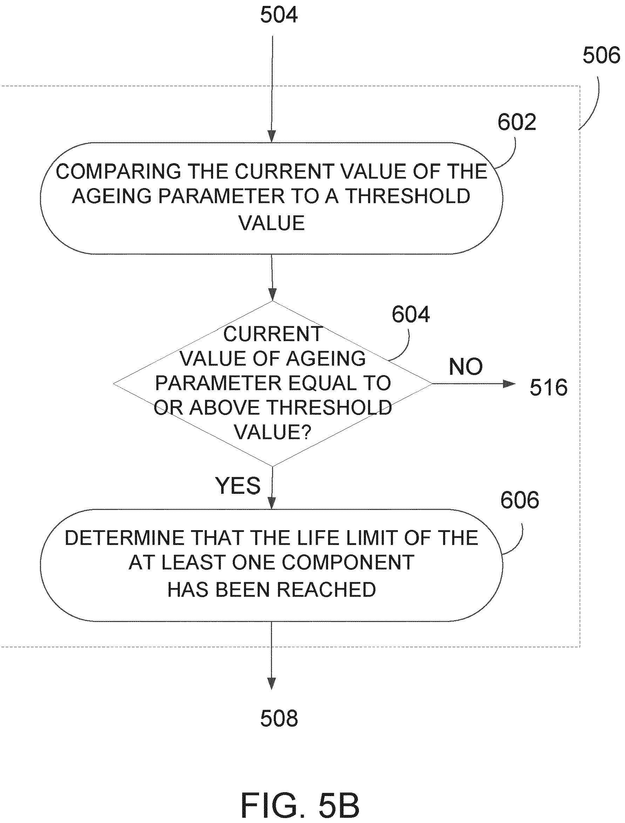

Referring now to Fig. 5B, in one embodiment, the step 506 of determining whether the life limit of the at least one component has been reached comprises comparing the current value of the ageing parameter to a threshold value (step 602). The next step 604 is to assess whether the current value of the ageing parameter is equal to or above the threshold value (in some embodiments within a predetermined tolerance or safety margin, as discussed herein above). If the current value of the ageing parameter is not equal to or above the threshold value (i.e. is below the threshold value), the method 500 ends at step 516. Otherwise, if the current value of the ageing parameter is equal to or above the threshold value, it is determined that the life limit of the at least one component has been reached (step 606) and the method 500 moves to step 508 of inhibiting the start of the engine.

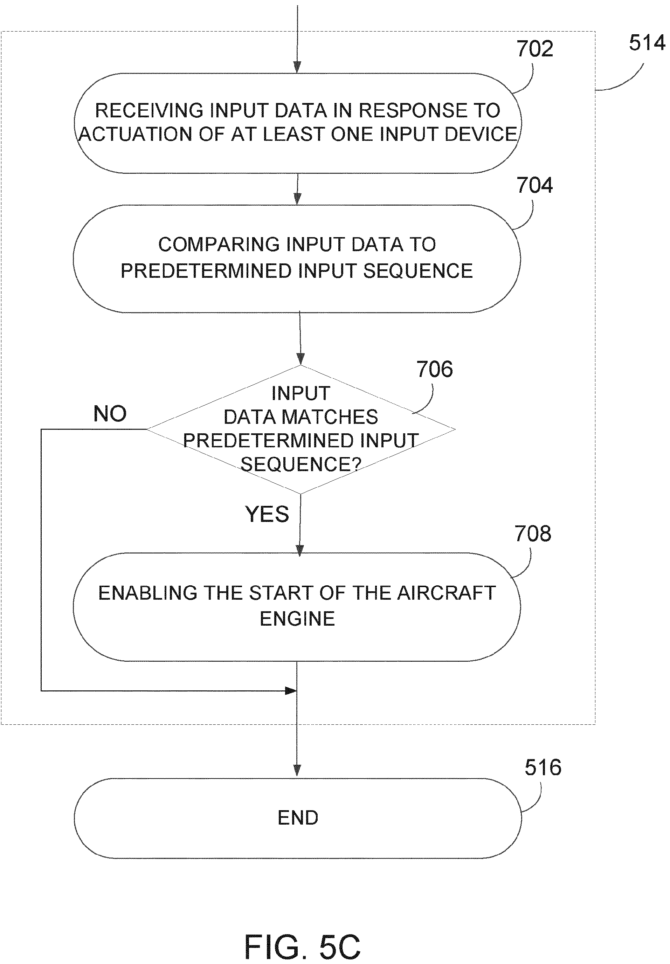

Referring now to Fig. 5C, in one embodiment, the optional step 514 of enabling the start of the aircraft engine upon receipt of a predetermined input sequence comprises receiving at step 702 input data in response to actuation of at least one input device (e.g., actuation of cockpit controls by an operator). The input data is then compared to a predetermined input sequence at step 704. At step 706, it is then assessed whether the input data matches the predetermined input sequence. If this is not the case, the method 500 ends at step 516. Otherwise, if it is determined that the input data matches the predetermined input sequence, the start of the aircraft engine is enabled at step 708.

The methods and systems described herein may be implemented in a high level procedural or object oriented programming or scripting language, or a combination thereof, to communicate with or assist in the operation of a computer system, for example the computing device 500. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 402 of the computing device 400, to operate in a specific and predefined manner to perform the functions described herein, for example those described in the method 500.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A monitoring method (500) for an aircraft engine (10), the method comprising:
obtaining (504), at an engine controller (206), a current value of an ageing parameter of at least one component (202) of the aircraft engine (10), the at least one component (202) having a life limit associated therewith;
determining (506), at the engine controller (206), based on the current value of the ageing parameter, whether the life limit of the at least one component (202) has been reached; and
inhibiting (508), at the engine controller (206), a start of the aircraft engine (10) when the life limit of the at least one component (202) has been reached.

2. The method of claim 1, wherein the determining whether the life limit of the at least one component (202) has been reached comprises comparing (602) the current value of the ageing parameter to a threshold value and determining (604) that the life limit of the at least one component (200) has been reached when the current value of the ageing parameter is equal to or above the threshold value, and optionally wherein the at least one component (202) is configured for rotation about an axis of the aircraft engine (10) and further wherein the ageing parameter comprises a number of rotations of the at least one component (202), the current value of the ageing parameter obtained by counting the number of rotations of the at least one component (202) over a period of operation of the aircraft engine (10).

3. The method of claim 1 or 2, further comprising transmitting (510) the current value of the ageing parameter from the engine controller (206) to at least one output device (210) over at least one communication path (208), and optionally one of:
wherein the engine controller (206) has a first trust level assigned thereto and further wherein the at least one output device (210) and/or the at least one communication path (208) has a second trust level assigned thereto, the second trust level lower than the first trust level; and
wherein the current value of the ageing parameter is transmitted to the at least one output device (210) comprising at least one display installed in a cockpit of an aircraft (100) the aircraft engine (10) is provided on.

4. The method of any one of claims 1 to 3, further comprising triggering (512) an alert when the life limit of the at least one component (202) has been reached.

5. The method of any one of claims 1 to 4, wherein the start of the aircraft engine (10) is inhibited until the at least one component (202) is replaced.

6. The method of any one of claims 1 to 5, further comprising:
receiving (702) input data in response to actuation of at least one input device (212) coupled to the engine controller (206);
comparing (704) the input data to a predetermined input sequence; and
enabling (708) the start of the aircraft engine (10) when the input data matches the predetermined input sequence, and optionally wherein the input data is received in response to an operator actuating at least one cockpit control associated with the aircraft engine (10).

7. A monitoring system for an aircraft engine (10), the system comprising:
a processing unit (402); and
a non-transitory computer-readable medium (404) coupled to the processing unit (402) and having stored thereon instructions (406) executable by the processing unit (402) for:
obtaining, at an engine controller (206), a current value of an ageing parameter of at least one component (202) of the aircraft engine (10), the at least one component (202) having a life limit associated therewith;
determining, at the engine controller (206), based on the current value of the ageing parameter, whether the life limit of the at least one component (202) has been reached; and
inhibiting, at the engine controller (206), a start of the aircraft engine (10) when the life limit of the at least one component (202) has been reached.

8. The system of claim 7, wherein the instructions (406) are executable by the processing unit (402) for comparing the current value of the ageing parameter to a threshold value and determining that the life limit of the at least one component (202) has been reached when the current value of the ageing parameter is equal to or above the threshold value.

9. The system of claim 8, wherein the at least one component (202) is configured for rotation about an axis of the aircraft engine (10) and further wherein the ageing parameter comprises a number of rotations of the at least one component (202), the instructions (406) being executable by the processing unit (402) for obtaining the current value of the ageing parameter by counting the number of rotations of the at least one component (202) over a period of operation of the aircraft engine (10).

10. The system of any one of claims 7 to 9, wherein the instructions (406) are executable by the processing unit (402) for transmitting the current value of the ageing parameter from the engine controller (206) to at least one output device (210) over at least one communication path (208).

11. The system of claim 10, wherein the engine controller (206) has a first trust level assigned thereto and further wherein the at least one output device (210) and/or the at least one communication path (208) has a second trust level assigned thereto, the second trust level lower than the first trust level.

12. The method of claim 10 or 11, wherein the instructions (406) are executable by the processing unit (402) for transmitting the current value of the ageing parameter to at least one display installed in a cockpit of an aircraft (100) the aircraft engine (10) is provided on.

13. The system of any one of claims 7 to 12, wherein the instructions (406) are executable by the processing unit (402) for triggering an alert when the life limit of the at least one component (202) has been reached.

14. The system of any one of claims 7 to 13, wherein the instructions (406) are executable by the processing unit (402) for inhibiting the start of the aircraft engine (10) until the at least one component (202) is replaced.

15. The system of any one of claims 7 to 14, wherein the instructions (406) are executable by the processing unit (402) for:
receiving input data in response to actuation of at least one input device (212) coupled to the engine controller (206);
comparing the input data to a predetermined input sequence; and
enabling the start of the aircraft engine (10) when the input data matches the predetermined input sequence, and optionally wherein the instructions (406) are executable by the processing unit (402) for receiving the input data in response to an operator actuating at least one cockpit control associated with the aircraft engine (10).
